# EUROPÄISCHE PATENTSCHRIFT

(11) **EP 3 405 689 B1**
(45) Veröffentlichungstag und Bekanntmachung des Hinweises auf die Patenterteilung: **25.09.2019**
(21) Anmeldenummer: 17714662.8
(22) Anmeldetag: 21.03.2017
(51) Int. Cl.: F16C 17/10, F16C 17/26, F16C 25/02

(54) **LAGERANORDNUNG**
BEARING ARRANGEMENT
ENSEMBLE DE PALIER

(30) Priorität: 22.03.2016 EP 16161635
(43) Veröffentlichungstag der Anmeldung: 28.11.2018
(73) Patentinhaber: Flender GmbH, 46395 Bocholt (DE)
(72) Erfinder: MEYER, Thomas, 52223 Stolberg (DE)
(74) Vertreter: Maier, Daniel Oliver
(86) Internationale Anmeldenummer: PCT/EP2017/056710
(87) Internationale Veröffentlichungsnummer: WO 2017/162679

(56) Entgegenhaltungen:
- DE-A1- 2 249 248
- DE-A1-102013 204 432
- DE-U1- 20 013 684
- US-A- 3 777 590
- US-A- 3 844 182

## Beschreibung

Die Erfindung betrifft eine Lageranordnung eines schrägverzahnten Stirnrads.

Es ist bekannt, Zahnräder mit einer Schrägverzahnung zu versehen, um die Belastbarkeit und die Laufruhe zu erhöhen. Die Schrägverzahnung bewirkt, dass auf das Zahnrad im Eingriff mit einem zweiten Zahnrad eine axiale Kraft wirkt. Bei schrägverzahnten Planetenrädern, die sowohl mit einem Hohlals auch einem Sonnenrad kämmen, gleichen sich die aus den beiden gegenüberliegenden Eingriffen resultierenden axialen Kräfte weitgehend aus, so dass auf das Planetenrad in Summe keine allzu große axiale Kraft wirkt. Deshalb genügt hier in vielen Fällen eine ohne viel Aufwand herzustellende axiale Führung des Planetenrads durch Führungsscheiben.

Bei schrägverzahnten Stirnrädern, die mit nur einem Zahnrad kämmen, wirkt aber demgegenüber eine viel stärkere Axialkraft. Sieht man von der in der Herstellung aufwändigen Pfeilverzahnung ab, wird diese bei einem Stirnrad auftretende axiale Kraft bisher durch Axiallager und Druckkämme in Kombination mit Radiallagern aufgefangen, siehe z.B.

EP 1 110 013 B1 (ZF Friedrichshafen AG) 27.06.2001 und

EP 0 021 223 B1 (Zahnräderfabrik Renk AG) 11.01.1984. Derartige Vorrichtungen benötigen allerdings Bauraum in unmittelbarer Nachbarschaft des Zahnrads, wodurch das konstruktive Design beschränkt wird.

Aus US 3,777,590 A ist eine Lageranordnung mit den Merkmalen des Oberbegriffs des Anspruchs 1 bekannt, die eine Ritzelwelle umfasst, deren Ritzelverzahnung zwischen zwei Gleitlagern angeordnet ist. Die Gleitlager sind konisch ausgebildet, wobei die jeweiligen Konusformen axial nach außen weisend ausgerichtet sind. Die Konuswinkel an den beiden unterschiedlichen Gleitlagern können dabei in einer Spanne von 35° bis 60° liegen.

Aufgabe der vorliegenden Erfindung ist es, eine verbesserte Lagerung eines schrägverzahnten Stirnrads zu schaffen.

Diese Aufgabe wird erfindungsgemäß durch eine Lageranordnung mit den in Anspruch 1 angegebenen Merkmalen gelöst. Die Aufgabe wird außerdem durch ein Getriebe mit einer solchen Lageranordnung gelöst. Vorzugsweise handelt es sich dabei um ein Industrie- oder ein WKA-Getriebe (WKA = Windkraftanlage). Außerdem wird die Erfindung gelöst durch ein Getriebe mit einer solchen Lageranordnung.

Die Erfindung betrifft eine Lageranordnung eines schrägverzahnten Stirnrads. Das Stirnrad ist drehfest auf einer Getriebewelle angeordnet. Dabei kann das Stirnrad mittels einer kraftschlüssigen, einer formschlüssigen oder einer stoffschlüssigen Verbindung auf der Welle angeordnet sein. Es ist auch möglich, dass das Stirnrad und die Welle einstückig ausgebildet sind. Die Ausgestaltung der Verbindung von Stirnrad und Welle ist aber nicht auf die genannten Möglichkeiten beschränkt.

Die Getriebewelle ist eine Welle, welche das Stirnrad trägt und um ihre Längsachse rotierbar gelagert ist. Aufgrund der drehfesten Anordnung des Stirnrads auf der Getriebewelle bewirkt eine Rotation des Stirnrads zwangsläufig eine Rotation der Getriebewelle. Die Getriebewelle ist in zwei konischen Gleitlagern gelagert. Ein konisches Gleitlager wird auch als Kegel-Gleitlager bezeichnet. Außer den zwei konischen Gleitlagern können noch weitere Lager, insbesondere konische Gleitlager, zur Lagerung der Getriebewelle vorhanden sein; es sind aber mindestens zwei konische Gleitlager zur Lagerung der Getriebewelle verhanden. Durch die Lagerung der Getriebewelle ist eine Rotation von Getriebewelle und Stirnrad relativ zu einem feststehenden Getriebegehäuse möglich. Übliche Lager zur Lagerung einer Getriebewelle sind Wälz- und Gleitlager.

Gemäß der Erfindung sind zumindest zwei der Lager der Getriebewelle als konische Gleitlager ausgebildet. Von Vorteil ist dabei, dass sich die axialen und radialen Kräfte, welche auf die Getriebewelle wirken, auf zwei Gleitlager verteilen; somit wird die Belastung pro Lager verringert. Bei einer ersten Drehrichtung des schrägverzahnten Stirnrads wird die Getriebewelle in eine erste Richtung gedrückt, bei einer zur ersten Drehrichtung umgekehrten zweiten Drehrichtung des schrägverzahnten Stirnrads, z.B. in einem Reversierbetrieb des Getriebes, wird die Getriebewelle in eine der ersten Richtung entgegengesetzte zweite Richtung gedrückt. In beiden Drehrichtungen des Strinrads wird somit die Axialkraft der Getriebwelle durch ein kegeliges Gleitlager aufgefangen.

Gemäß der Erfindung sind die Kegelwinkel der zwei konischen Gleitlager unterschiedlich. Der Kegelwinkel eines Gleitlagers ist der kleinere der beiden Winkel, die zwischen einer Tangente entlang der Gleitfläche und der Rotationssymmetrieachse, d.h. der Längsachse, der Gleitlagerhülse des Gleitlagers vorliegen; es existieren zwei Grenzfälle, in denen der Kegelwinkel 0 Grad oder 90 Grad beträgt. Erfindungsgemäß ist die Differenz der Kegelwinkel der zwei konischen Gleitlager größer als eine herstellungsbedingte Toleranz der Gleitlager-Kegelwinkel. Außerdem ist dabei die Ausrichtung des kegeligen Gleitlagers unbeachtlich; mit anderen Worten wird der Kegelwinkel eines Gleitlagers stets mit einem positiven Wert aus dem Wertebereich [0°; 90°] angegeben.

Das Merkmal, dass die Kegelwinkel der zwei konischen Gleitlager unterschiedlich sind, hat den Vorteil, dass unterschiedliche Wellenschiefstellungen im Bereich der beiden Lager besser korrigierbar sind als wenn die zwei konischen Gleitlager denselben Kegelwinkel aufwiesen.

Der Erfindung liegt somit die Überlegung zugrunde, Kegel-Gleitlager einzusetzen, welche in der Lage sind, sowohl axiale als auch radiale Kräfte abzuleiten. Die auf das Zahnrad wirkende axiale Kraft schiebt die Getriebewelle in eine bestimmte Richtung, abhängig vom Drehsinn des Zahnrads. Vorzugsweise ist ein Kegel-Gleitlager so angeordnet, dass das verjüngte Ende der inneren Lagerhülse in Richtung der Axialkraft zeigt. Auf diese Weise werden die konischen Lagerhülsen ineinander gedrückt, so dass das Gleitlager nicht auswandern kann. Dabei kann durch eine axiale Verstellung der kegelförmigen äußeren Lagerhülse relativ zu der inneren Lagerhülse das radiale Lagerspiel in einfacher Weise eingestellt werden.

Zudem besitzt die verstellbare Lagerabordnung einen einfachen Aufbau und ist für die Steckmontage geeignet. Mit der Erfindung entfällt der Einsatz von großflächigen Axiallagern und der axiale Bauraum der Lageranordnung wird verkürzt.

Die bei einem Stirnrad auftretende axiale Kraft wird erfindungsgemäß in einfacher Weise mittels kegeliger Gleitflächen eines Gleitlagers abgefangen.

Die erfindungsgemäße Lageranordnung mit Gleitlagern hat im Vergleich zu einer Lageranordnung mit Wälzlagern ein geringeres Gewicht und nimmt weniger Bauraum ein.

Da das Stirnrad ein Drehmoment auf die Welle überträgt, ist das Stirnrad drehfest auf der Getriebewelle angeordnet, und ist weiterhin eine Anordnung des mindestens einen konischen Gleitlagers zwischen dem Stirnrad und der Getriebewelle unmöglich. Stattdessen sind die konischen Gleitlager jeweils an Stirnseiten des Stirnrads auf der Getriebewelle angeordnet, mit anderen Worten: die Gleitlager befinden sich axial neben und nicht radial unter der Verzahnung. Das bringt den Vorteil, dass die kegeligen Gleitlager, welche im Vergleich zu einem zylindrischen Gleitlager zwangsläufig einen vergrößerten Außendurchmesser aufweist, nicht zu einer ungünstigen Durchmesser-Vergrößerung des Stirnrads führen. Somit kann mit der erfindungsgemäßen Lageranordnung ein Planetenrad mit einem relativ kleinen Außendurchmesser realisiert werden, d.h. das Ziel eines Getriebes mit hoher Leistungsdichte und geringem Gewicht verwirklicht werden.

Im Bereich einer Gleitlager-Schmiertasche kann sich kein hydrodynamisch tragender Schmierfilm aufbauen, weil die Schmiertasche eine geometrische Störung des konvergenten Schmierspalts darstellt. Daher ist es bei Gleitlagern üblich, die Schmiertaschen an demjenigen Bauteil des Gleitlagers anzuordnen, für welches sich Punktlast ergibt; in diesem Fall kann die Schmiertasche in Umfangsrichtung an einer Position fix positioniert werden, wo sie außerhalb des Lastbereichs des Gleitlagers, d.h. außerhalb des hydrodynamischen Schmierspalts, liegt und keine Störung des Gleitsystems verursacht. Aus diesem Grund versucht man, eine Anordnung einer Schmiertasche an einem Bauteil, auf welches eine Umfangslast wirkt, generell zu vermeiden.

Übertragen auf die vorliegende Lageranordnung bedeutet das, dass die Schmiertaschen nicht an einem mit der Welle rotierenden Bauteil der Gleitlager angeordnet sind, sondern an einem relativ zu der Welle ruhenden Bauteil. Unter diesem Aspekt unterscheidet sich die vorliegenden Lageranordnung von einer Gleitlageranordnung einer Planetenradlagerung, bei welcher die Schmiertaschen auf der Planetenachse angeordnet werden: das Planetenrad dreht sich um die relativ dazu ruhende Achse, deshalb wirkt auf die Planetenachse eine Punktlast, und die Schmiertasche wird auf der Planetenachse positioniert.

Um eine Verdrehung der Schmiertasche in die den tragenden Schmierspalt aufweisende Lastzone hinein zu verhindern, müssen bei der Planetenradlagerung die Achse und alle anderen Bauteile, die auf der Achse montiert werden, gegen Verdrehen gesichert werden. In der erfindungsgemäßen Lageranordnung dagegen ergibt sich Punktlast für den feststehenden Gehäuseteil der Lagerung, in welchem die Welle gelagert ist; folglich benötigt man keine Verdrehsicherung des mit der Welle rotierenden Lagerkörpers. Allerdings kann eine Verdrehsicherung des mit der Welle rotierenden Lagerkörpers sinnvoll sein, um Schlupf zwischen der Welle und dem auf der der Welle angeordneten Lagerkörper und die sich daraus ergebende Gefahr von Passungsrost zu verhindern. Die Verdrehsicherung des mit der Welle rotierenden Lagerkörpers, z.B. von inneren Lagerhülsen, kann beispielsweise dadurch bewirkt werden, dass mit Übermaß hergestellte Lagerhülsen nach ihrer Positionierung auf die Getriebewelle geschrumpft werden.

Die Erfindung umfasst mindestens eines der konischen Gleitlager eine innere und eine äußere Lagerhülse mit einem dazwischen gebildeten Schmierspalt. Dabei ist die innere Lagerhülse auf der Getriebewelle angeordnet, und an der radial äußeren Umfangsfläche der inneren Lagerhülse ist eine kegelmantelförmige Gleitfläche ausgebildet. Die äußere Lagerhülse ist korrespondierend zu der inneren Lagerhülse ausgebildet, so dass zwischen den beiden Lagerhülsen ein Schmierspalt gebildet wird. Von Vorteil ist dabei, dass die Höhe des Schmierspalts durch eine Veränderung der axialen Position der äußeren Lagerhülse relativ zu dem Getriebegehäuse einstellbar ist. Zur Erhöhung der Tragfähigkeit von Gleitlagern ist es erforderlich, ein präzises, kleinstmögliches für den Anwendungsfall angepasstes Lagerspiel einstellen zu können, unter Berücksichtigung aller Wärmeausdehnungen der beteiligten Bauteile. Die axialen Wellenverlagerungen beim Auftreten von Reversiermomenten müssen gering gehalten werden.

Ferner sind bei mindestens einem der konischen Gleitlager der Kegelwinkel der inneren Lagerhülse und der Kegelwinkel der äußeren Lagerhülse unterschiedlich. Der Kegelwinkel einer Gleitlagerhülse ist der Winkel, der zwischen einer Tangente entlang der Gleitfläche und der Rotationssymmetrieachse, d.h. der Längsachse, der Gleitlagerhülse vorliegt. Durch die unterschiedlichen Kegelwinkel der beiden Hülsen kann eine Neigung der Getriebewelle relativ zum Getriebegehäuse, welche unter Last auftreten kann, ausgeglichen werden, um Kantenträger im Lager zu verhindern, ähnlich wie durch eine geometrische Korrektur im Gleitlager. Die unterschiedlichen Kegelwinkel der Lagerhülsen dienen somit einem Ausgleich von Verformungen und Schiefstellungen der Getriebewelle.

Vorteilhafte Ausgestaltungen und Weiterbildungen der Erfindung sind in den abhängigen Ansprüchen angegeben.

Gemäß einer bevorzugten Ausgestaltung der Erfindung ist die Lageranordnung als Momentenlager ausgeführt, d.h. zwei auf derselben Stirnseite des Stirnrads angeordnete Gleitlager sind in O-Anordnung angeordnet. Da ein Momentenlager eine gegenüber Schiefstellungen der Welle besonders stabile Wellenlagerung darstellt, kann auf weitere Lagerungen der Welle verzichtet werden, somit insbesondere eine fliegende Lagerung der Welle erreicht werden.

Gemäß einer bevorzugten Ausgestaltung der Erfindung sind die zwei konischen Gleitlager nebeneinander auf derselben Seite des Stirnrads angeordnet und die verjüngten Enden der zwei konischen Gleitlager weisen zueinander. Von Vorteil ist dabei, dass die in O-Anordnung angeordneten Gleitlager axiale Kräfte in beiden Richtungen der Getriebewelle auffangen können. Somit kann ein Erstes der zwei Gleitlager die axiale Kraft im Regelbetrieb aufnehmen, während das Andere der zwei Gleitlager die axiale Kraft im Reversierbetrieb oder Bremslasten aufnehmen kann. Axialbelastungen werden also in beiden Richtungen, aber jeweils nur von einem Lager bzw. Lagersatz aufgenommen. Lager in O-Anordnung ergeben eine relativ starre Lagerung, die sich besonders gut für das Aufnehmen von Momentbelastungen eignet.

Gemäß einer bevorzugten Ausgestaltung der Erfindung sind die zwei konischen Gleitlager axial beabstandet angeordnet. Diese axiale Beabstandung kann vorzugsweise durch einen zwischen die verjüngten Enden der inneren und/oder äußeren Lagerhülsen eingesetzten Distanzring erfolgen. Von Vorteil dabei ist, dass eine Mindesthöhe des Schmierspalts eingehalten wird. Dabei kann auch eine Schmierstoffzufuhr zu den Schmierspalten der Gleitlager über den Distanzring erfolgen, z.B. mithilfe von Schmierstoffzuführkanälen, die sich im Inneren der Getriebewelle erstrecken. Es ist somit möglich, Schmierstoff entlang der Getriebewelle bis zum Distanzring und von dort in die Schmierspalte zu leiten.

Gemäß einer bevorzugten Ausgestaltung der Erfindung sind die zwei konischen Gleitlager auf beiden Seiten des Stirnrads angeordnet sind und die verjüngten Enden der zwei konischen Gleitlager voneinander weg weisen. Mit anderen Worten: ein erstes Gleitlager ist auf einer ersten Stirnseite des Stirnrads angeordnet, und ein zweites Gleitlager ist auf der entgegengesetzten Stirnseite des Stirnrads angeordnet. Von Vorteil dabei ist, dass die in X-Anordnung angeordneten Gleitlager axiale Kräfte in beiden Richtungen der Getriebewelle auffangen können. Somit kann ein Erstes der zwei Gleitlager die axiale Kraft im Regelbetrieb aufnehmen, während das Andere der zwei Gleitlager die axiale Kraft im Reversierbetrieb oder Bremslasten aufnehmen kann. Axialbelastungen werden also in beiden Richtungen, aber jeweils nur von einem Lager bzw. Lagersatz aufgenommen.

Gemäß einer bevorzugten Ausgestaltung der Erfindung weist wenigstens ein konisches Gleitlager eine Justiervorrichtung zur Verstellung der äußeren Lagerhülse in axialer Richtung auf, um den Schmierspalt des Gleitlagers in einer definierten Höhe einzustellen. Von Vorteil dabei ist, dass eine definierte Höhe des Schmierspalts einstellbar ist. Eine optimale Höhe des Schmierspalts zwischen den Gleitflächen der korrespondierenden Lagerhülsen des Gleitlagers ist eine wesentliche Voraussetzung für einen zuverlässigen Betrieb der Lageranordnung.

Gemäß einer bevorzugten Ausgestaltung der Erfindung ist genau ein Gleitlager verstellbar, und die äußeren Lagerhülsen der anderen Gleitlager weisen eine axialfeste Position auf. Von Vorteil dabei ist, dass eine definierte Höhenjustierung der Schmierspalte durch Verstellung an einem Gleitlager vorgenommen werden kann.

Gemäß einer bevorzugten Ausgestaltung der Erfindung weist mindestens eines der konischen Gleitlager eine Schmierstoffzuführung in einem bezüglich der Getriebewelle feststehenden Element des Gleitlagers auf. Die Schmierstoffzuführung kann einen Schmierstoffzuführungskanal durch, in oder entlang des Getriebegehäuses sowie eine Schmiertasche zur Verteilung von Schmierstoff im Gleitspalt umfassen. Die Schmiertasche ist dabei in einem die Welle umgebenden, relativ zur Welle feststehenden Bauteil des Gleitlagers angeordnet, z.B. in einer äußeren Lagerhülse. Von Vorteil ist dabei, dass die Schmierstoffzuführung durch feststehende Komponenten des Getriebes erfolgt und die Schmiertasche in einem mit einer Punktlast beaufschlagten Bauteil des Gleitlagers angeordnet ist.

Gemäß einer bevorzugten Ausgestaltung der Erfindung hat das Getriebe einen Lagerdeckel und/oder ein Gehäuse. Dabei ist die äußere Lagerhülse Bestandteil des Lagerdeckels bzw. des Gehäuses des Getriebes. Außerdem ist es möglich, dass zumindest einer der Wellenlagerkörper und die Welle einstückig ausgebildet sind. Von Vorteil ist in beiden Fällen, dass eine Integration von Bauelementen des Getriebes erfolgt und eine Verdrehsicherung existiert.

Gemäß einer bevorzugten Ausgestaltung der Erfindung wird die innere Lagerhülse durch einen kegeligen Wellenabsatz ersetzt. Von Vorteil ist dabei, dass die Kegelhülse, d.h. die innere Lagerhülse, auf der Welle entfallen kann, so dass der radiale Bauraum reduziert wird.

Im Folgenden wird die Erfindung anhand mehrerer Ausführungsbeispiele unter Zuhilfenahme der beiliegenden Zeichnung erläutert. Es zeigt jeweils schematisch und nicht maßstabsgetreu
- Fig. 1: eine angestellte Gleitlagerung in X-Anordnung;
- Fig. 2: eine Fest-Los-Lagerung mit einem doppel-kegeligen Gleitlager und einem zylindrischen Radiallager;
- Fig. 3: eine Justiervorrichtung;
- Fig. 4: eine innere Lagerhülse; und
- Fig. 5: eine alternative Ausführung einer inneren Lagerhülse;
- Fig. 6 und 7: zeigen eine weitere Ausgestaltung der Erfindung;
- Fig. 8: eine angestellte Gleitlagerung in X-Anordnung mit deutlich unterschiedlichen Kegelwinkeln; und
- Fig. 9: eine Fest-Los-Lagerung mit einem doppel-kegeligen Gleitlager mit deutlich unterschiedlichen Kegelwinkeln und einem zylindrischen Radiallager.

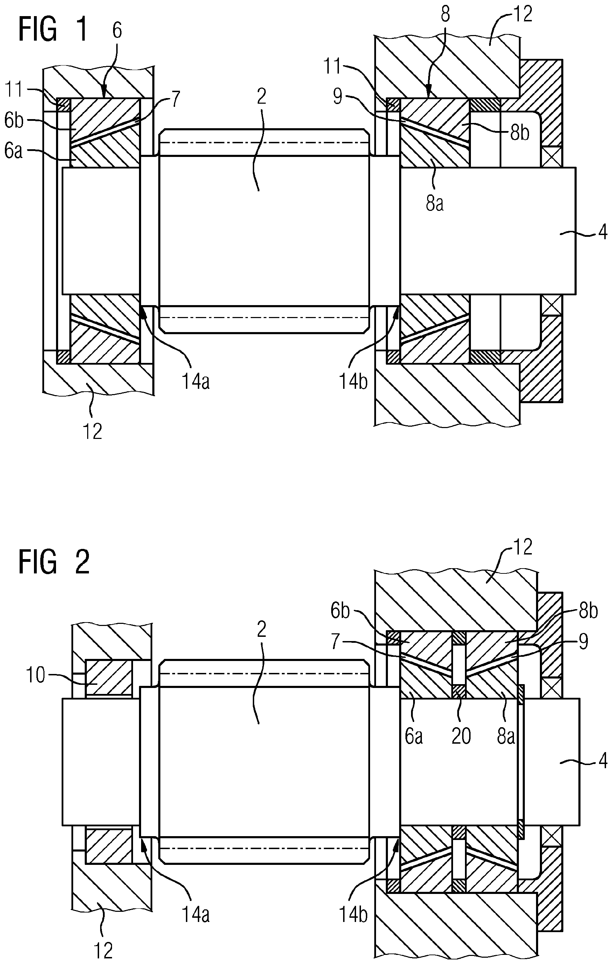

Fig. 1 zeigt einen Schnitt einer in einem Getriebegehäuse 12 rotierbar gelagerten Getriebewelle 4, auf welcher ein schrägverzahntes Stirnrad 2 drehfest und axial unverschieblich angeordnet ist. Die Getriebewelle 4 weist unmittelbar anschließend an beide Stirnseiten des Stirnrads 2 jeweils eine Schulter 14a, 14b auf, gebildet durch eine Radiusverringerung der Getriebewelle 4. In den durch die Schultern 14a, 14b gebildeten Absätzen ist auf beiden Seiten des Stirnrads 2 jeweils eine innere, konisch geformte Gleitlagerhülse 6a, 8a drehfest auf der Getriebewelle 4 angeordnet. Die Verdrehsicherung der inneren Lagerhülsen 6a, 8a ist dadurch bewirkt, dass die mit Übermaß hergestellte Passung von Lagerhülse und Welle nach der Positionierung der Hülse auf die Getriebewelle geschrumpft werden. Dabei weisen die verjüngten Enden der konisch ausgebildeten inneren Lagerhülsen 6a, 8a voneinander weg.

Zur Ausbildung von Gleitflächen sind die konisch geformten, radial äußeren Umfangsflächen der inneren Lagerhülsen 6a, 8a mit einer Schicht eines Lagermetalls für ein Gleitlager belegt, vorzugsweise aus einem weichen, relativ leicht verschleißenden Metall wie z.B. einer bleihaltigen Legierung.

In Lagersitzen, die im Getriebegehäuse 12 ausgebildet sind, sind äußere Lagerhülsen 6b, 8b feststehend montiert, welche zu den auf der Getriebewelle 4 angeordneten inneren Lagerhülsen 6a, 8a korrespondierend ausgebildet sind. Jeweils eine innere 6a, 8a und eine korrespondierende äußere Lagerhülse 6b, 8b mit dem dazwischen gebildeten Schmierspalt 9 bilden ein Gleitlager 6, 8. Die Getriebewelle 4 mit dem darauf angeordneten Stirnrad ist bei der in Fig. 1 gezeigten Anordnung in zwei kegeligen Gleitlagern 6, 8 in X-Anordnung gelagert. Dabei ist bei beiden Gleitlagern 6, 8 jeweils axial zwischen einer Stirnfläche der äußeren Lagerhülsen 6b, 8b und einer jeweils angrenzenden Lagersitzschulter des Getriebegehäuses 12 ein Distanzring 11 zur Einstellung des Lagerspiels eingesetzt.

Die Kegelwinkel der zwei konischen Gleitlager 6, 8 sind unterschiedlich groß gewählt. Dabei ist die Differenz der beiden Kegelwinkel größer als eine herstellungsbedingte Toleranz. Da die herstellungsbedingte Toleranz der Kegelwinkel ±0,01° beträgt, liegt der Kegelwinkel des linken konischen Gleitlagers 6 bei 19,1° ± 0,01°, der Kegelwinkel des rechten konischen Gleitlagers 8 bei 19,2° ± 0,01°. Die minimale Differenz der beiden Gleitlager 6, 8 liegt also bei (19,2° - 0,01°) - (19,1° + 0,01°) = 0,08° und ist somit 8-mal größer als die herstellungsbedingte Toleranz 0,01°.

Fig. 2 zeigt einen Schnitt einer Getriebewelle 4, auf der ein schrägverzahntes Stirnrad 2 drehfest und axial unverschieblich angeordnet ist, ähnlich zu der in Fig. 1 dargestellten Getriebewelle. Die Getriebewelle 4 weist unmittelbar anschließend an beide Stirnseiten des Stirnrads 2 jeweils eine Schulter 14 auf, gebildet durch eine Radiusverringerung der Getriebewelle 4.

In einem durch eine axial rechte Schulter 14b gebildeten Wellenabsatz ist eine erste innere Gleitlagerhülse 6a drehfest auf der Getriebewelle 4 angeordnet. Durch einen Distanzring 20 von ersten inneren Gleitlagerhülse 6a beabstandet ist eine zweite innere Gleitlagerhülse 8a drehfest auf der Getriebewelle 4 angeordnet. Dabei weisen die verjüngten Enden der konisch ausgebildeten inneren Lagerhülsen 6a, 8a zueinander. Anschließend an eine axial linke Schulter 14a ist die Getriebewelle in einem weiteren Lager 10 gelagert, welches als ein nicht-kegeliges, zylindrisches Radialgleitlager oder als ein Wälzlager ausgebildet ist.

In Lagersitzen, die im Getriebegehäuse 12 ausgebildet sind, befinden sich äußere Lagerhülsen 6b, 8b, welche zu den auf der Getriebewelle 4 angeordneten beiden inneren Lagerhülsen 6a, 8a korrespondierend ausgebildet sind. Jeweils eine innere 6a, 8a und eine korrespondierende äußere Lagerhülse 6b, 8b mit dem dazwischen gebildeten Schmierspalt 9 bilden ein Gleitlager 6, 8. Die Getriebewelle 4 mit dem darauf angeordneten Stirnrad ist somit an einem Wellenende in zwei kegeligen Gleitlagern 6, 8 in O-Anordnung gelagert, an dem anderen Wellenende in einem nicht-kegeligen Gleitlager oder in einem Wälzlager. Die Kegelwinkel der zwei konischen Gleitlager 6, 8 sind dabei, wie in dem in Fig. 1 gezeigten Ausführungsbeispiel, unterschiedlich groß gewählt.

Auf diese Weise kann eine Fest-Los-Lagerung der Getriebewelle 4 realisiert werden. Dies bringt Vorteile hinsichtlich der maximal auftretenden Wärmedehnungen und somit eine Reduzierung des variablen Lagerspiels bei unterschiedlichen Betriebstemperaturen über der Lagerbreite des Festlagers.

Da die kegeligen Gleitlager 6, 8 mit den zueinander weisenden Spitzen in O-Anordnung ein Momentenlager ausbilden, ist eine Ausgestaltung möglich, bei der das weitere Lager 10 auf der anderen Stirnseite des Stirnrads entfällt.

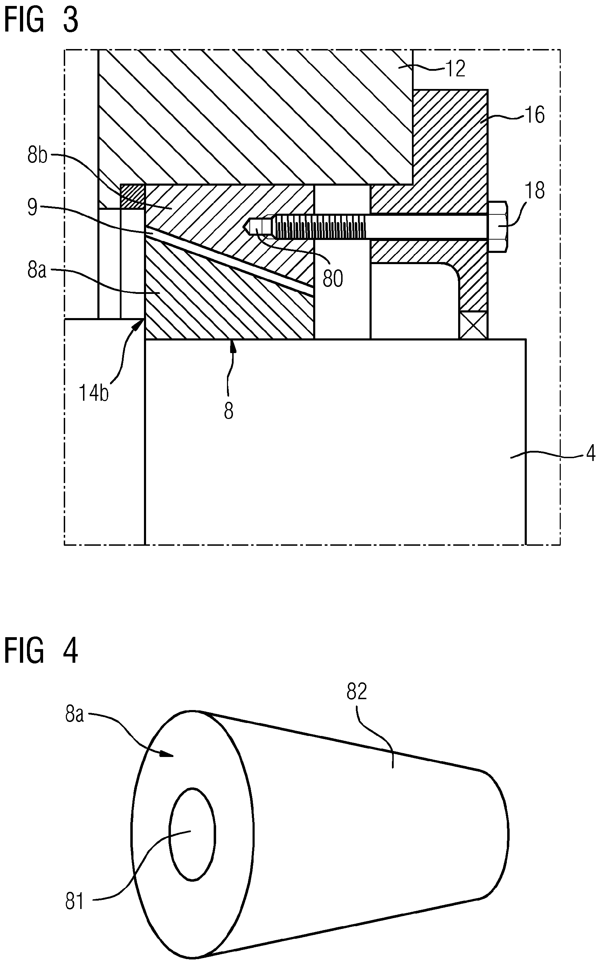

Fig. 3 zeigt eine vergrößerte Darstellung des in Fig. 1 gezeigten kegeligen Gleitlagers 8, welches am rechten Wellenende der Getriebewelle 4 angeordnet ist. Es ist eine Justiervorrichtung 16, 18 zur Verstellung der äußeren Lagerhülse 8b in axialer Richtung vorgesehen, um den Schmierspalt 9 des Gleitlagers 8 in einer definierten Höhe einzustellen.

Die Justiervorrichtung 16, 18 umfasst eine Justierschraube 18 und ein am Getriebegehäuse 12 abgestütztes Stützelement 16, wobei die Justierschraube 18 durch das Stützelement 16 geführt und in ein Gewindeloch 80 eingeschraubt ist, welches in axialer Richtung in die äußere Lagerhülse 8b eingebracht ist. Durch Drehen der Justierschraube 18 kann die äußere Lagerhülse 8b relativ zu dem Getriebegehäuse 12 in axialer Richtung der Getriebewelle 4 verschoben werden. Je nach Drehrichtung der Justierschraube 18 ergibt sich die Verschiebungsrichtung und folglich eine Verringerung oder Erhöhung der Spalthöhe des Schmierspalts 9 des Gleitlagers 8.

Fig. 4 zeigt eine Ansicht einer inneren Lagerhülse 8a, welche eine axiale Bohrung 81 zur Aufnahme der Getriebewelle sowie an ihrem Außenumfang eine kegelmantelförmige Gleitfläche 82 aufweist.

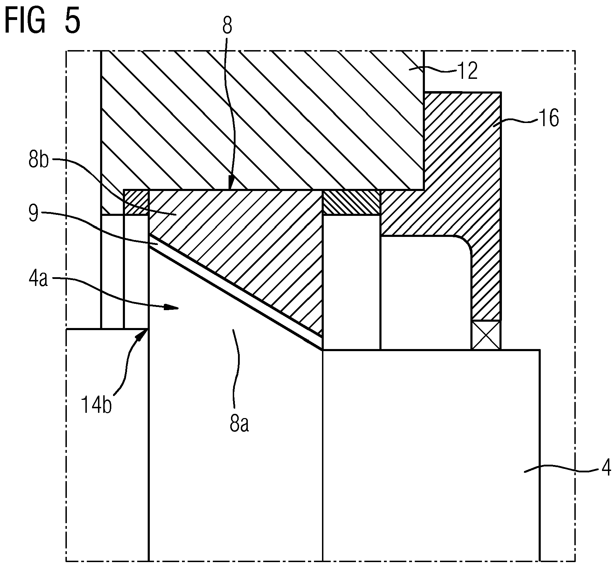

Fig. 5 zeigt anhand des in Fig. 1 gezeigten kegeligen Gleitlagers 8, welches am rechten Wellenende der Getriebewelle 4 angeordnet ist, eine alternative Ausgestaltung eines Gleitlagers. Dabei ist die innere Lagerhülse 8a nicht als ein separates Bauteil ausgebildet, welches auf der Welle 4 befestigt wird. Stattdessen ist die innere Lagerhülse 8a einstückig mit der Getriebewelle 4 ausgebildet, nämlich durch einen kegeligen Wellenabsatz 4a der Getriebewelle 4 gebildet.

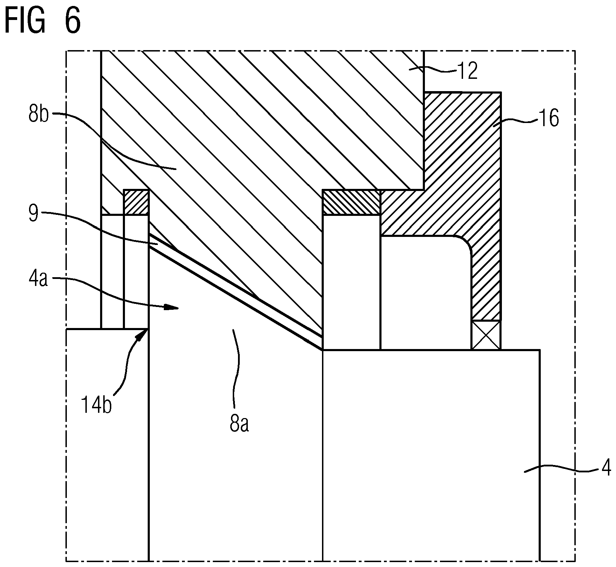

Fig. 6 zeigt eine Ausgestaltung, bei der die äußere Lagerhülse 8b Bestandteil des Gehäuses 12 ist, nämlich einstückig mit dem Gehäuse 12 ausgebildet ist.

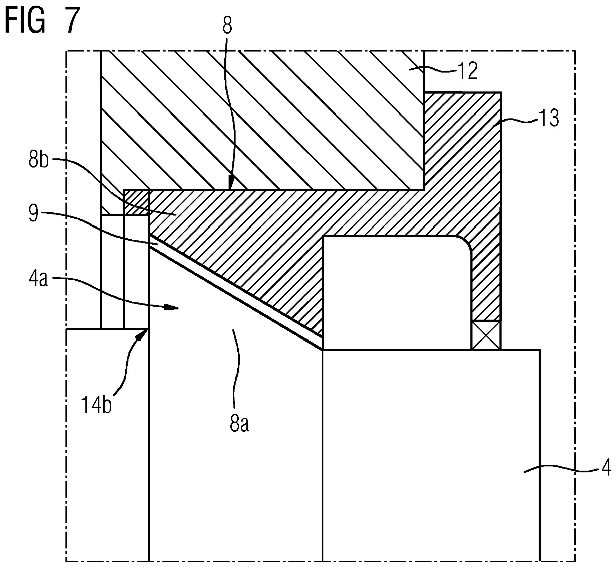

Fig. 7 zeigt eine Ausgestaltung, bei der die äußere Lagerhülse 8b Bestandteil eines Lagerdeckels 13 ist, nämlich einstückig mit dem Lagerdeckel 13 ausgebildet ist.

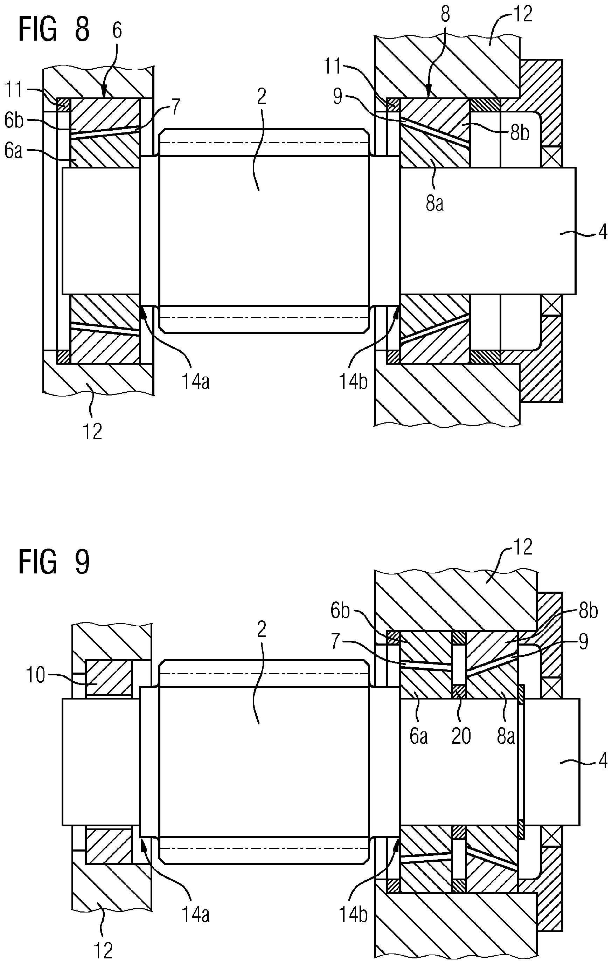

Fig. 8 zeigt, ähnlich wie Fig. 1, eine angestellte Gleitlagerung in X-Anordnung. Im Gegensatz zu dem in Fig. 1 gezeigten Ausführungsbeispiel sind bei der in Fig. 8 gezeigten Lageranordnung die Kegelwinkel der beiden Gleitlager deutlich unterschiedlich, d.h. die Differenz ist mit dem unbewaffneten Auge erkennbar. Dabei ist die Differenz der beiden Kegelwinkel größer als eine herstellungsbedingte Toleranz. Da die herstellungsbedingte Toleranz der Kegelwinkel ±0,01° beträgt, liegt der Kegelwinkel des linken konischen Gleitlagers 6 bei 5° ± 0,01°, der Kegelwinkel des rechten konischen Gleitlagers 8 bei 19,2° ± 0,01°.

Fig. 9, ähnlich wie Fig. 2, eine Fest-Los-Lagerung mit einem doppelkegeligen Gleitlager und einem zylindrischen Radiallager. Im Gegensatz zu dem in Fig. 2 gezeigten Ausführungsbeispiel sind bei der in Fig. 9 gezeigten Lageranordnung die Kegelwinkel der beiden Gleitlager deutlich unterschiedlich, d.h. die Differenz ist mit dem unbewaffneten Auge erkennbar. Dabei ist die Differenz der beiden Kegelwinkel größer als eine herstellungsbedingte Toleranz. Da die herstellungsbedingte Toleranz der Kegelwinkel ±0,01° beträgt, liegt der Kegelwinkel des linken konischen Gleitlagers 6 bei 5° ± 0,01°, der Kegelwinkel des rechten konischen Gleitlagers 8 bei 19,2° ± 0,01°.

## Patentansprüche

1. Lageranordnung eines schrägverzahnten Stirnrads (2), welches drehfest auf einer Getriebewelle (4) angeordnet ist, wobei die Getriebewelle (4) in zwei konischen Gleitlagern (6, 8) gelagert ist, wobei die Kegelwinkel der zwei konischen Gleitlager (6, 8) unterschiedlich sind, **dadurch gekennzeichnet, dass** mindestens eines der konischen Gleitlager (6, 8) eine innere (6a, 8a) und eine äußere (6b, 8b) Lagerhülse mit einem dazwischen gebildeten Schmierspalt (7, 9) umfasst, wobei die innere Lagerhülse (6a, 8a) auf der Getriebewelle (4) angeordnet ist und wobei an einer radial äußeren Umfangsfläche der inneren Lagerhülse (6a, 8a) eine kegelmantelförmige Gleitfläche (82) ausgebildet ist, und wobei die äußere Lagerhülse (6b, 8b) entsprechend ausgebildet ist, und wobei bei mindestens einem der konischen Gleitlager (6, 8) der Kegelwinkel der inneren Lagerhülse (6a, 8a) und der Kegelwinkel der äußeren (6b, 8b) Lagerhülse unterschiedlich sind.

2. Lageranordnung nach Anspruch 1, wobei die Lageranordnung als Momentenlager ausgeführt ist.

3. Lageranordnung nach einem der vorhergehenden Ansprüche, wobei die zwei konischen Gleitlager (6, 8) nebeneinander auf derselben Seite des Stirnrads (2) angeordnet sind und die verjüngten Enden der zwei konischen Gleitlager (6, 8) zueinander weisen.

4. Lageranordnung nach Anspruch 3, wobei die zwei konischen Gleitlager (6, 8) axial beabstandet angeordnet sind.

5. Lageranordnung nach einem der vorhergehenden Ansprüche, wobei die zwei konischen Gleitlager (6, 8) auf je einer Seite des Stirnrads (2) angeordnet sind und die verjüngten Enden der zwei konischen Gleitlager (6, 8) voneinander weg weisen.

6. Lageranordnung nach einem der Ansprüche 1 bis 5, wobei wenigstens ein konisches Gleitlager (8) eine Justiervorrichtung (16, 18) zur Verstellung der äußeren Lagerhülse (8b) in axialer Richtung aufweist, um den Schmierspalt (9) des Gleitlagers (8) in einer definierten Höhe einzustellen.

7. Lageranordnung nach Anspruch 6, wobei genau ein Gleitlager (8) verstellbar ist und die äußere Lagerhülse (6b) des anderen Gleitlagers (6) eine axialfeste Position aufweist.

8. Lageranordnung nach einem der vorhergehenden Ansprüche, wobei wenigstens ein konisches Gleitlager (6, 8) eine Schmierstoffzuführung in einem bezüglich der Getriebewelle (4) feststehenden Element des Gleitlagers (6, 8) aufweist.

9. Getriebe mit einer Lageranordnung nach einem der vorhergehenden Ansprüche.

10. Getriebe mit einer Lageranordnung nach einem der Ansprüche 1 bis 8 und einem Lagerdeckel (13) und/oder einem Gehäuse (12), wobei die äußere Lagerhülse (6b, 8b) Bestandteil des Lagerdeckels (13) bzw. des Gehäuses (12) ist.

## Claims

1. Bearing arrangement of a helical spur gear (2) which is non-rotatably arranged on a transmission shaft (4), wherein the transmission shaft (4) is mounted in two conical sliding bearings (6, 8), wherein the cone angles of the two conical sliding bearings (6, 8) are different, **characterised in that** at least one of the conical sliding bearings (6, 8) comprises an inner (6a, 8a) and an outer (6b, 8b) bearing sleeve with a lubrication gap (7, 9) formed therebetween, wherein the inner bearing sleeve (6a, 8a) is arranged on the transmission shaft (4) and wherein a surface of a cone-shaped sliding face (82) is formed on a radially outer circumferential face of the inner bearing sleeve (6a, 8a), and wherein the outer bearing sleeve (6b, 8b) is designed accordingly, and wherein with at least one of the conical sliding bearings (6, 8), the conical angle of the inner bearing sleeve (6a, 8a) and the conical angle of the outer (6b, 8b) bearing sleeve are different.

2. Bearing arrangement according to claim 1, wherein the bearing arrangement is designed as a slew bearing.

3. Bearing arrangement according to one of the preceding claims, wherein the two conical sliding bearings (6, 8) are arranged side by side on the same side of the spur gear (2) and the tapered ends of the two conical sliding bearings (6, 8) point toward each other.

4. Bearing arrangement according to claim 3, wherein the two conical sliding bearings (6, 8) are arranged axially spaced apart from each other.

5. Bearing arrangement according to one of the preceding claims, wherein the two conical sliding bearings (6, 8) are arranged on one side each of the spur gear (2) and the tapered ends of the two conical sliding bearings (6, 8) point away from each other.

6. Bearing arrangement according to one of claims 1 to 5, wherein at least one conical sliding bearing (8) has an adjusting device (16, 18) for adjusting the outer bearing sleeve (8b) in the axial direction in order to adjust the lubrication gap (9) of the sliding bearing (8) in a defined height.

7. Bearing arrangement according to claim 6, wherein exactly one sliding bearing (8) is adjustable and the outer bearing sleeve (6b) of the other sliding bearing (6) has an axially fixed position.

8. Bearing arrangement according to one of the preceding claims, wherein at least one conical sliding bearing (6, 8) has a lubricant supply in an element of the sliding bearing (6, 8) that is fixed in respect of the transmission shaft (4).

9. Transmission having a bearing arrangement according to one of the preceding claims.

10. Transmission having a bearing arrangement according to one of claims 1 to 8 and a bearing cover (13) and/or a housing (12), wherein the outer bearing sleeve (6b, 8b) is a component of the bearing cover (13) or the housing (12).

## Revendications

1. Agencement de palier d'une roue (2) droite à denture inclinée, qui est solidaire en rotation d'un arbre (4) d'engrenage, l'arbre (4) d'engrenage étant monté dans deux paliers (6, 8) lisses coniques, les angles de cône des deux paliers (6, 8) lisses coniques étant différents, **caractérisé en ce qu'**au moins l'un des paliers (6, 8) lisses coniques comprend un coussinet intérieur (6a, 8a) et un coussinet extérieur (6b, 8b), en ayant un intervalle (7, 9) de lubrification formé entre eux, le coussinet (6a, 8a) intérieur étant monté sur l'arbre (4) d'engrenage et une surface (82) de glissement en forme de surface latérale de cône étant constituée sur une surface périphérique extérieure radialement du coussinet (6a, 8a) intérieur et le coussinet (6b, 8b) extérieur étant constitué de manière correspondante, et dans lequel, pour au moins l'un des coussinets (6, 8) coniques, l'angle de cône du coussinet (6a, 8a) intérieur et l'angle de cône du coussinet (6b, 8b) extérieur sont différents.

2. Agencement de palier suivant la revendication 1, dans lequel l'agencement de palier est réalisé en palier de moment.

3. Agencement de palier suivant l'une des revendications précédentes, dans lequel les deux paliers (6, 8) lisses coniques sont disposés l'un à côté de l'autre du même côté de la roue (2) droite et les extrémités rétrécies des deux paliers (6, 8) lisses coniques sont tournées l'une vers l'autre.

4. Agencement de palier suivant la revendication 3, dans lequel les deux paliers (6, 8) lisses coniques sont disposés à distance axialement.

5. Agencement de palier suivant l'une des revendications précédentes, dans lequel les deux paliers (6, 8) lisses coniques sont disposés chacun d'un côté de la roue (2) droite et les extrémités rétrécies des deux paliers (6, 8) lisses coniques sont tournées loin l'une de l'autre.

6. Agencement de palier suivant l'une des revendications 1 à 5, dans lequel au moins un palier (8) lisse conique a un système (16, 18) d'ajustement pour le déplacement du coussinet (8b) extérieur dans la direction axiale, afin de régler l'intervalle (9) de lubrification du palier (8) lisse à une hauteur définie.

7. Agencement de palier suivant la revendication 6, dans lequel exactement un palier (8) lisse est réglable et l'autre coussinet (6b) de l'autre palier (6) lisse a une position fixe axialement.

8. Agencement de palier suivant l'une des revendications précédentes, dans lequel au moins un palier (6, 8) lisse conique a un apport de lubrifiant dans un élément, fixe par rapport à l'arbre (4) d'engrenage, du palier (6, 8) lisse.

9. Engrenage ayant un agencement de palier suivant l'une des revendications précédentes.

10. Engrenage ayant un agencement suivant l'une des revendications 1 à 8, ayant un chapeau (13) de palier et/ou un corps (12), le coussinet (6b, 8b) extérieur faisant partie du chapeau (13) de palier ou du corps (12).
